Europäisches Patentamt

European Patent Office

Office européen des brevets

(19)

(11) EP 0 908 846 A2

(12) EUROPEAN PATENT APPLICATION

(43) Date of publication:
14.04.1999 Bulletin 1999/15

(51) Int Cl.$^6$: G06T 7/20

(21) Application number: 98307946.8

(22) Date of filing: 30.09.1998

(84) Designated Contracting States:
AT BE CH CY DE DK ES FI FR GB GR IE IT LI LU
MC NL PT SE
Designated Extension States:
AL LT LV MK RO SI

(30) Priority: 07.10.1997 JP 274239/97
26.12.1997 JP 360704/97

(71) Applicant: CANON KABUSHIKI KAISHA
Tokyo (JP)

(72) Inventors:
• Ishida, Yoshihiro, Canon Kabushiki Kaisha
Tokyo (JP)

• Oya, Takashi, Canon Kabushiki Kaisha
Tokyo (JP)
• Shibara, Masahiron, Canon Kabushiki Kaisha
Tokyo (JP)

(74) Representative:
Beresford, Keith Denis Lewis et al
BERESFORD & Co.
2-5 Warwick Court
High Holborn
London WC1R 5DJ (GB)

(54) Moving object detection apparatus and method

(57) This invention provides an image processing apparatus/method characterized by inputting image data, detecting an object in the input image data, measuring the distance from the detected object to a predetermined position, and detecting a predetermined object on the basis of the measurement result.

This invention also provides an image processing apparatus/method characterized by inputting image data by image pickup means having an optical system, detecting an object in the input image data, controlling the optical system of the image pickup means, and detecting a predetermined object on the basis of the object detection result and the optical system control result.

FIG. 8

## Description

### BACKGROUND OF THE INVENTION

#### Field of the Invention

The present invention relates to an image processing apparatus and an image processing method of detecting a desired object from input image data.

#### Related Background Art

One conventional moving object detection apparatus detects an intruder or abnormality by detecting a moving object in an image being taken by a video camera for a monitoring purpose or the like. In many instances, the size of a moving object to be detected by such an apparatus is previously known. Therefore, it is desirable to so design an apparatus that the apparatus detects only a moving object of a specific size.

Unfortunately, in an image picked up by an image pickup device such as a video camera, the size of an object changes in accordance with the distance to the object or the magnification.

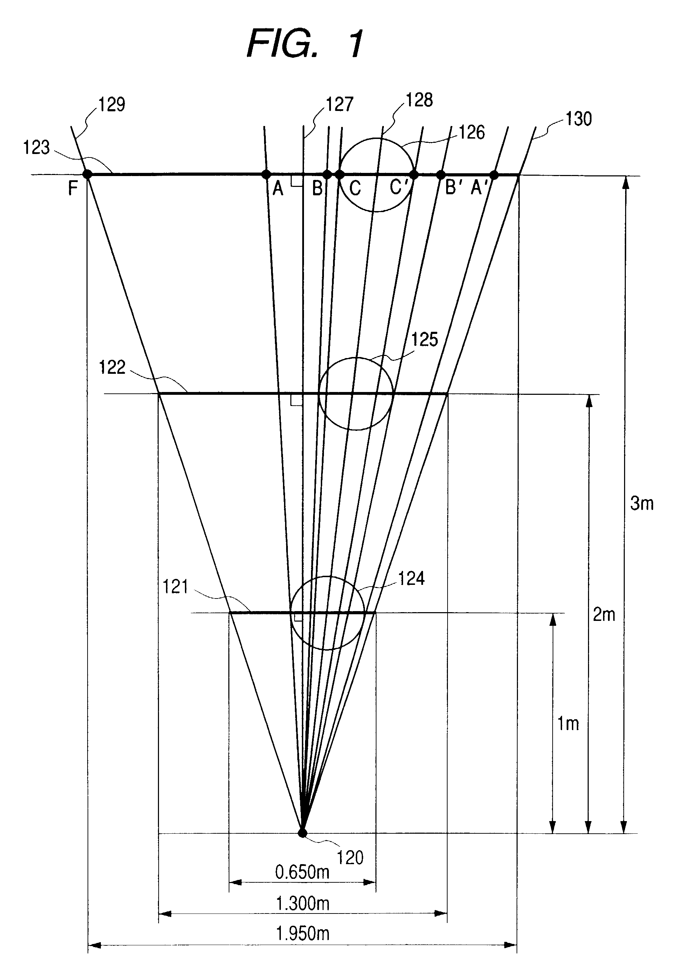

This will be described below with reference to Fig. 1. Referring to Fig. 1, an image pickup system has an image pickup center 120 and an optical axis 127. Planes 121, 122, and 123 are perpendicular to the optical axis 127 and at distances of 1, 2, and 3 m, respectively, from the image pickup center 120. Spheres 124, 125, and 126 have a radius of 1/3 m, and their centers are in the planes 121, 122, and 123, respectively. The horizontal and vertical field angles of this image pickup system are 36.0° and 27.0°, respectively. Fig. 1 shows the horizontal field angle viewed from immediately above. Lines 129 and 130 indicate the field angle range viewed from the image pickup center 120. The angle formed by 130 - 120 - 129 is 36.0°. Both of 127 - 120 - 129 and 127 - 120 - 130 form an angle of 18°. An image picked up by this image pickup system is formed by 640 pixels (horizontal direction) x 480 lines (vertical direction).

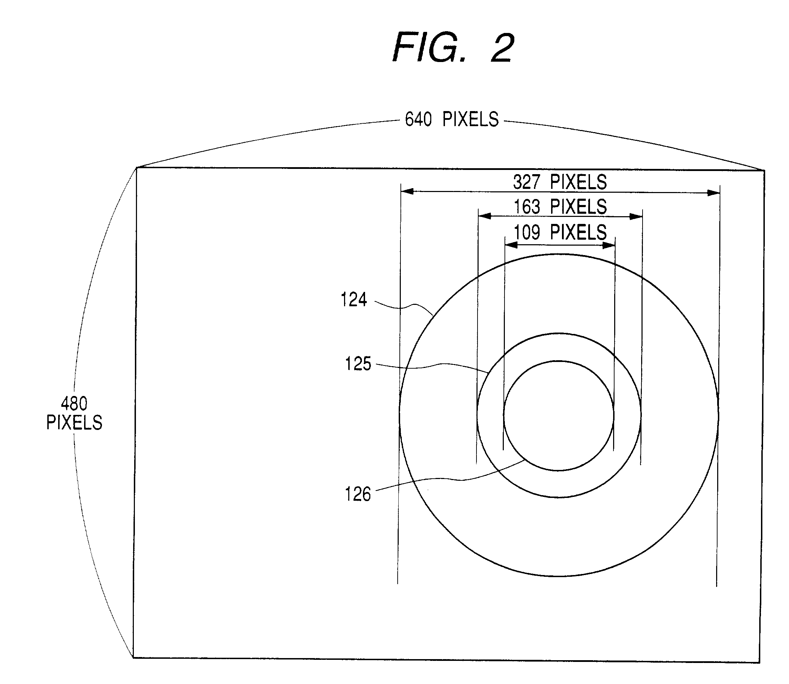

Fig. 2 shows the sizes of the spheres 124, 125, and 126 in an image frame captured by 640 x 480 pixels described above. As shown in Figs. 1 and 2, images of objects having exactly the same size have different sizes in the frame in accordance with their distances from the image pickup center. Referring to Figs. 1 and 2, the sphere 124 shown in Fig. 1 occupies a horizontal field angle of about 19° (the angle formed by A - 120 - A') across its diameter and has an image size of about 327 pixels in the frame. Similarly, the sphere 125 occupies about 9.5° (the angle formed by B - 120 - B') and has an image size of about 163 pixels. The sphere 126 occupies about 6.4° and has an image size of 109 pixels.

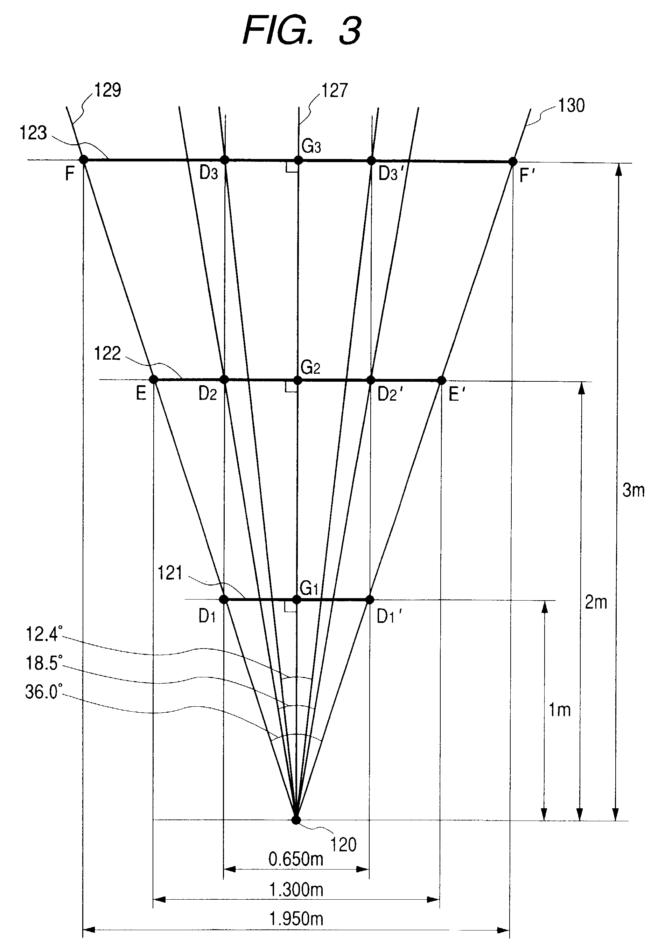

Fig. 3 shows results when the image pickup system optically changes its magnification. $D_1 - 120 - D_1'$ indicates a field angle of about 36.0° obtained at a reference magnification of 1×. $D_2 - 120 - D_2'$ indicates a field angle of about 18.5° obtained when the magnification is 2×. $D_3 - 120 - D_3'$ indicates a field angle of about 12.4° obtained when the magnification is 3×. When the magnification is changed in this manner, a field angle corresponding to 640 pixels of the frame size of an image changes. When the magnification is increased, the image size of an object increases in proportion to the magnification. That is, the object size relative to the image frame size increases.

Accordingly, detection of an object of a specific size must be performed in consideration of the above phenomenon.

Additionally, a monitoring area for a moving object to be detected by a moving object detection apparatus is often limited. So, it is desirable to allow the apparatus to detect a moving object only in a part of an image area being picked up.

For example, the following moving object detection is possible.

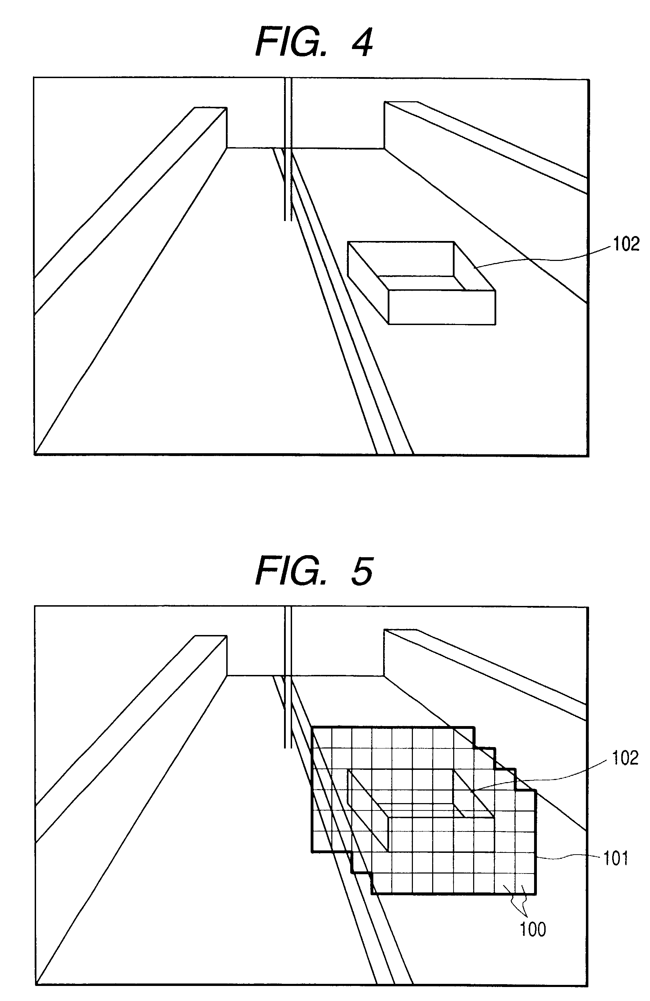

Fig. 4 shows an image taken at a certain fixed field angle by a video camera. Fig. 5 shows a detection area 101 set in the image shown in Fig. 4. This detection area 101 is composed of a plurality of rectangular areas 100 as a minimum unit including n x m pixels (e.g., 16 x 12 pixels or 24 x 24 pixels). This detection area 101 is used to, e.g., detect an object which is intruding into an area surrounded by a fence 102 in the image shown in Fig. 4.

In the above prior art, however, the specific detection area 101 is set in an image picked up at a certain fixed angle, and image changes in this specific area are detected. Therefore, not only changes in a monitoring area to be detected but also changes which need not be detected or should not be detected are detected.

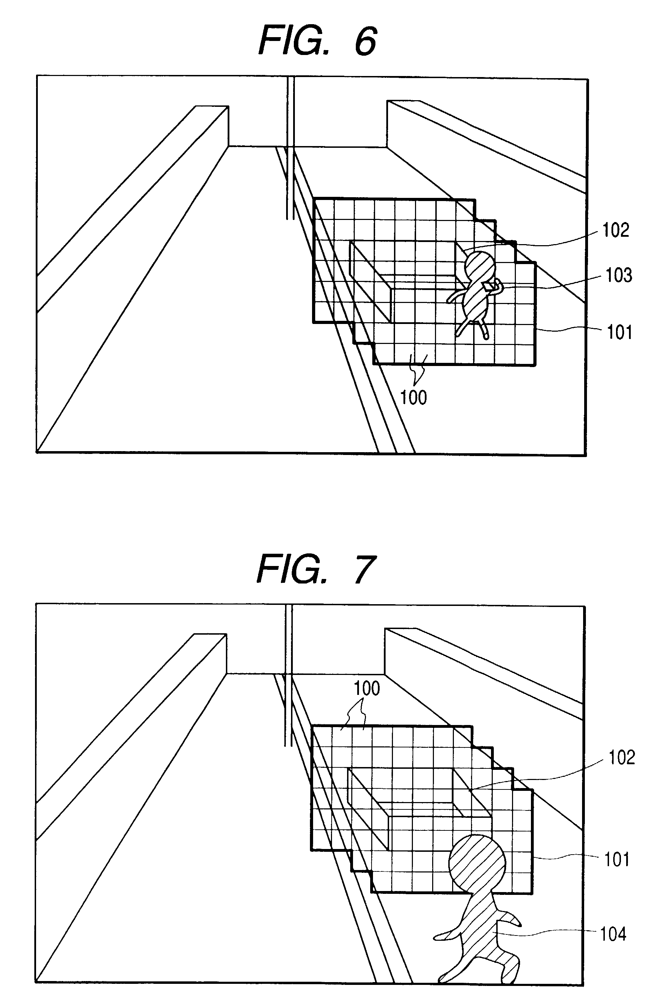

For example, if an intruder 103 approaches the fence 102 as shown in Fig. 6, changes to be detected can be detected in the detection area 101. However, even if a moving object 104 exists far away (closer to an image pickup camera) from the detection point as shown in Fig. 7, changes in the detection area 101 are detected. That is, changes which should not be detected are detected.

To avoid this situation, it is possible to improve the setting of the field angle, e.g., install a video camera above the monitoring area. Generally, however, the setting of the field angle is not always selectable. Also, accidental detection of an object flying over the monitoring area is unavoidable.

### SUMMARY OF THE INVENTION

The present invention has been made in consideration of the above situation and has as a concern to provide an image processing apparatus/method capable of detecting an object (e.g., an object of a predetermined size or an object within a predetermined distance range from a predetermined object) desired by a user from input image data.

According to one preferred embodiment of the present invention, an image processing apparatus/ method is characterized by inputting image data, detecting an object in the input image data, measuring the distance from the detected object to a predetermined position, and detecting a predetermined object on the basis of the measurement result.

According to another preferred embodiment, there is provided an image processing apparatus/method characterized by inputting image data by image pickup means having an optical system, detecting an object in the input image data, controlling the optical system of the image pickup means, and detecting a predetermined object on the basis of the object detection result and the optical system control result.

Other features and advantages of the invention will become apparent from the following detailed description taken in conjunction with the accompanying drawings.

BRIEF DESCRIPTION OF THE DRAWINGS

Fig. 1 is a view showing an example of the relationships between the image sizes of an object and the distances of the same object from a camera;
Fig. 2 is a view showing the image sizes of the object in the individual states shown in Fig. 1;
Fig. 3 is a view showing the relationships between the image pickup magnifications and the field angles;
Fig. 4 is a view showing an image taken at a certain fixed field angle by a video camera;
Fig. 5 is a view showing a frame in which a detection area is set in the image shown in Fig. 4;
Fig. 6 is a view for explaining object detection in the detection area set as shown in Fig. 5;
Fig. 7 is a view for explaining object detection in the detection area set as shown in Fig. 5;
Fig. 8 is a block diagram showing the arrangement of a moving object detection apparatus according to the first embodiment of the present invention;
Fig. 9 is a view showing an example of a focus detection area;
Fig. 10 is a view for explaining a moving object detection method using background difference;
Fig. 11 is a block diagram showing the arrangement of a moving object detection unit 5 shown in Fig. 8;
Fig. 12 is a block diagram showing the arrangement of a noise removal unit 56 shown in Fig. 11;
Fig. 13 is a view for explaining a 3 x 3-pixel area set to remove noise;
Fig. 14 is a view showing noise-removed binary image data input in raster scan order;
Figs. 15A and 15B are views for explaining a rectangular area 81;

Fig. 16 is a block diagram showing the arrangement of a moving object size detection unit 6 shown in Fig. 8;
Fig. 17 is a block diagram showing a system control unit 20 shown in Fig. 8;
Fig. 18 is a flow chart for explaining the process of detecting a moving object of a predetermined size;
Fig. 19 is a flow chart for explaining the process of moving object position detection;
Fig. 20 is a flow chart for explaining the process of detecting the distance to a moving object;
Fig. 21 is a flow chart for explaining the process of moving object size detection and correction;
Fig. 22 is a flow chart for explaining another process of moving object size detection and correction;
Fig. 23 is a block diagram showing the arrangement of a moving object detection apparatus according to the fifth embodiment of the present invention;
Fig. 24 is a block diagram showing the arrangement of a system control unit 200 shown in Fig. 23; and
Fig. 25 is a flow chart for explaining the process of detecting a moving object within a certain distance range.

DETAILED DESCRIPTION OF THE PREFERRED EMBODIMENTS

Embodiments of the present invention will be described below with reference to the accompanying drawings.

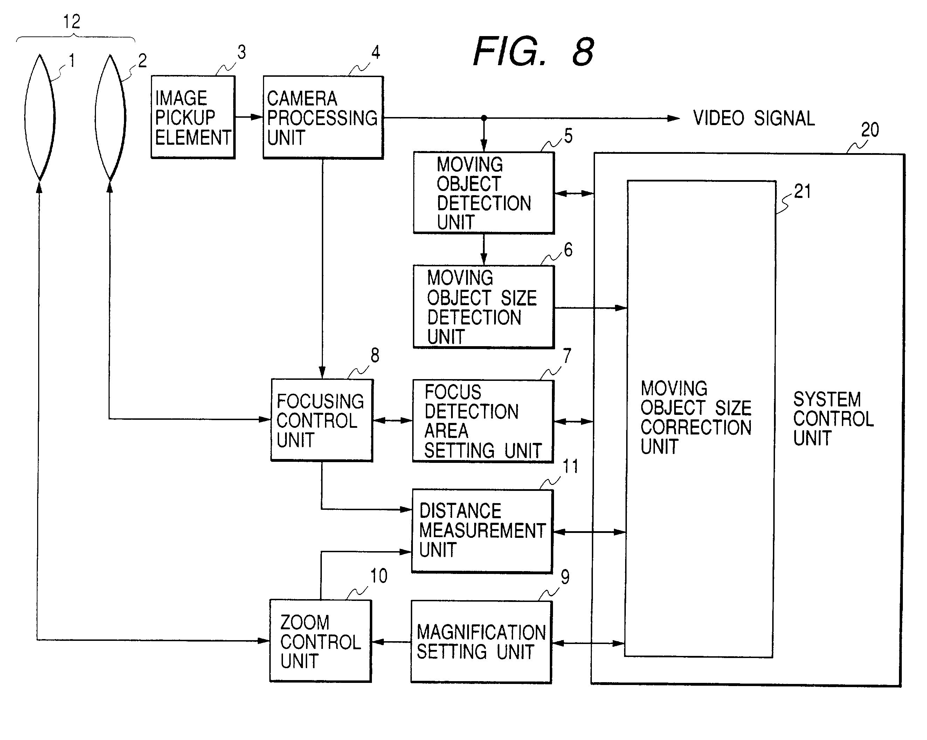

Fig. 8 is a block diagram showing the arrangement of a moving object detection apparatus according to the first embodiment of the present invention. Referring to Fig. 8, a phototaking lens 12 with a zooming function includes a zooming lens 1 for changing the magnification and a focusing lens 2 for focusing. This phototaking lens 12 forms an optical image of an object on the imaging surface of an image pickup element 3 such as a CCD. The image pickup element 3 outputs an electrical signal indicating the optical image to a camera processing unit 4. The camera processing unit 4 performs well-known processes (e.g., gain correction, γ correction, and color balance adjustment) for the output from the image pickup element 3 and outputs a video signal of a predetermined format. A focus detection area setting unit 7 designates an image area to be automatically focused by a focusing control unit 8.

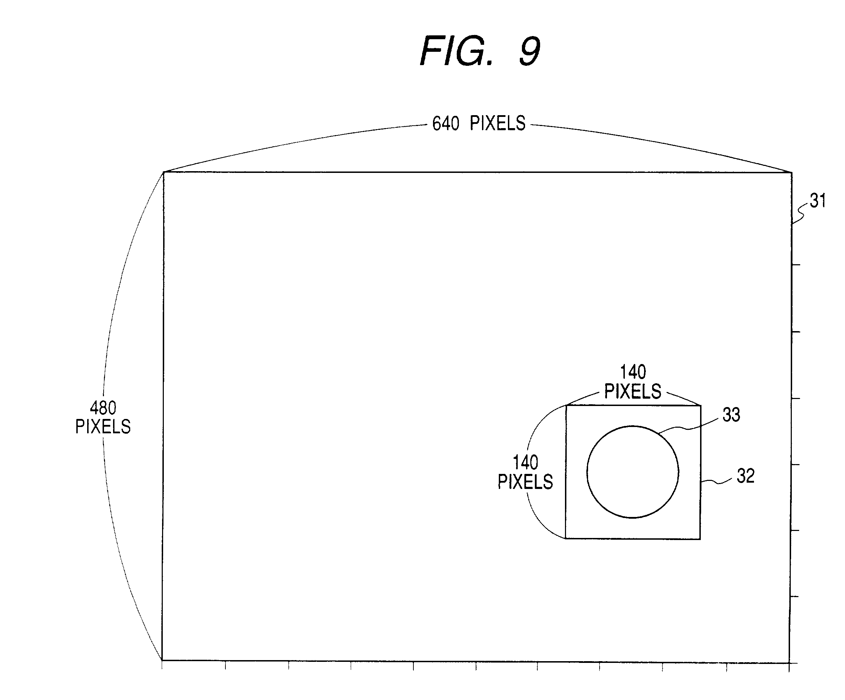

Fig. 9 is a view showing an example of the focus detection area in an image. In Fig. 9, it is assumed that an image area 31 is a digital image composed of 640 x 480 pixels. A rectangular area composed of 140 x 140 pixels in this image area 31 is indicated as a focus detection area 32. A circular object 33 is shown as a principal object present in the focus detection area 32.

The focus detection area 32 is relative positional information on the imaging surface, which indicates an area in the imaging surface having an object image to be focused. This focus detection area 32 is set in the focusing control unit 8 via the focus detection area setting unit 7 under the control of a system control unit 20. The focusing control unit 8 moves and adjusts the position of the focusing lens 2 along its optical axis by controlling a focusing lens motor (stepping motor) (not shown) so as to maximize a high-frequency component contained in a portion of the output image signal from the camera processing unit 4, which corresponds to the area set by the focus detection area setting unit 7, thereby automatically focusing the focusing lens 2 on the object. The position of the focusing lens 2 (the lens position at any arbitrary timing within a position range over which the focusing motor can drive the focusing lens) is externally output from the focusing control unit in the form of, e.g., a pulse number indicating the number of pulses by which the focusing lens motor is driven from its reference position.

A magnification setting unit 9 sets a target magnification when a zoom control unit 10 moves and adjusts the position of the zooming lens 1 along its optical axis by driving a zooming lens motor (stepping motor) (not shown), thereby controlling zooming. This magnification setting unit 9 receives a set magnification from the system control unit 20 and sets the set magnification in the zoom control unit 10 as a zooming motor driving pulse value corresponding the magnification as a zooming lens motor control set value. In accordance with this set value, the zoom control unit 10 controls the zooming lens motor to move and adjust the position of the zooming lens 1 along its optical axis and thereby enables image formation zoomed to a desired magnification. Similar to the focusing lens 2, the position of the zooming lens 1 is externally output from the zoom control unit 10 in the form of, e.g., a pulse number indicating the number of pulses by which the zooming lens motor is driven from the reference position. Note that the elements described above are well-known elements in a video camera and the like.

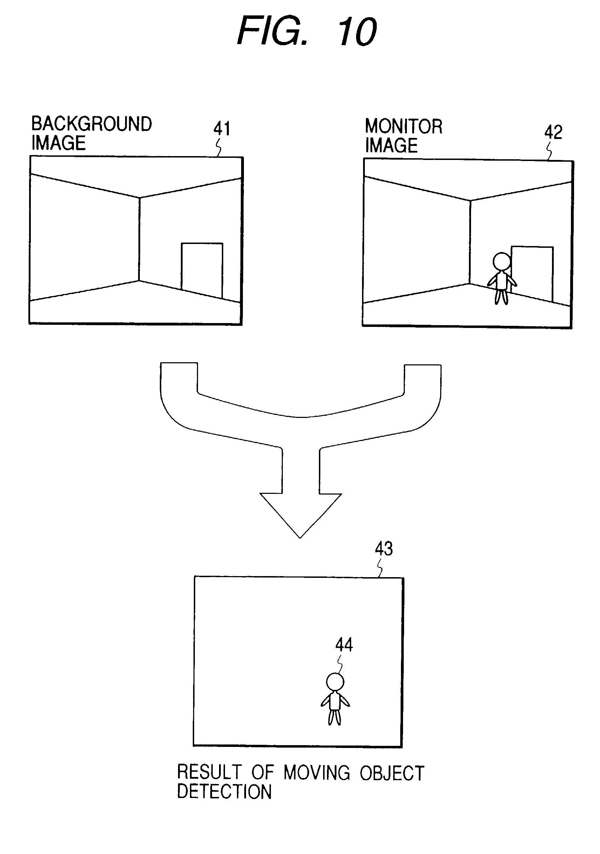

A moving object detection unit 5 detects a moving object in an image from the output video signal from the camera processing unit 4. As a moving object detection method of this sort, a method using background difference is known. That is, as shown in Fig. 10, an image 41 containing no moving object in an observation area is previously picked up and stored. Next, a monitor image 42 (an image currently being picked up) obtained during observation is compared with the image 41 to produce a difference image 43 by calculating the difference between the pixel values of each pair of corresponding pixels. This difference image 43 has signification pixel values only in a portion different from the image 41 previously stored and containing no moving object. An area 44 contained in the difference image 43 and composed of pixels having significant pixel values (values much larger than zero) is detected as a moving object.

Whether the size (e.g., the number of pixels contained in the area 44) of the detected moving object corresponds to a previously assumed size is checked, thereby checking whether the moving object is a desired object having a size to be detected. In this operation a moving object size correction unit 21 corrects the size of the detected moving object to a size obtained when the object is detected at a reference distance and a reference magnification, in accordance with the distance from the camera to the moving object. This allows detection of a moving object of a specific size within a broader range than in conventional methods.

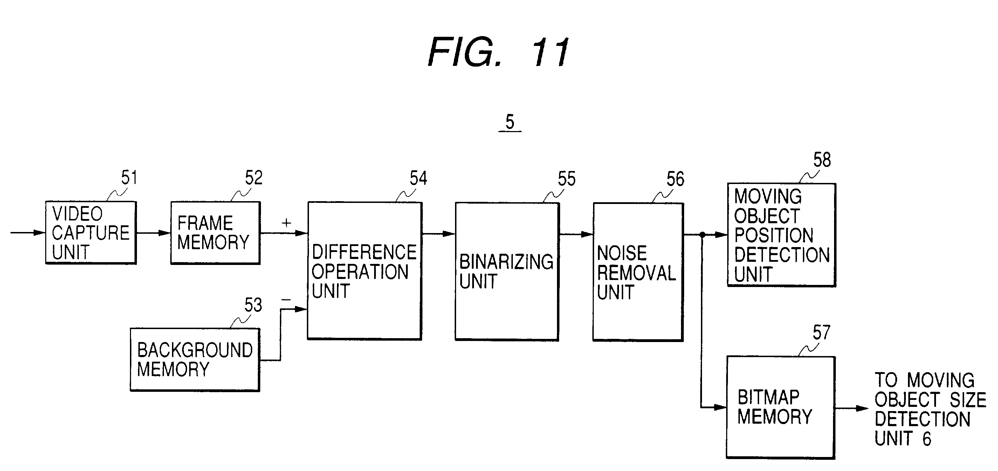

Details of the moving object detection unit 5 will be described below with reference to Fig. 11. Referring to Fig. 11, a video capture unit 51 receives the output video signal from the camera processing unit 4 shown in Fig. 8 and writes a digital image in units of frames in a frame memory 52. A background memory 53 stores an image, such as the background image 41 taken with no moving object present, which is previously picked up by an initializing circuit (not shown) before monitoring is started.

A difference operation unit 54 receives pixel values obtained by simultaneously reading out corresponding pixels of the two images held in the frame memory 52 and the background memory 53 in the scanning order and outputs values (absolute values) obtained by subtracting the output pixel values from the background memory 53 from the output pixel values from the frame memory 52. When the differences (absolute values) in one frame output from the difference operation unit 54 are arranged in the scanning order, the difference image 43 shown in Fig. 10 is obtained.

A binarizing unit 55 binarizes the output from the difference operation unit 54 by using a predetermined threshold value regarded as a significant value and sequentially outputs pixel values, 1 (ON: black) for pixels in an area in which the two images have a significant difference and 0 (OFF: white) for other pixels, in the scanning order. From this binary image, a noise removal unit 56 removes, e.g., isolated pixels, fine black pixel areas, and fine holes (fine white pixel areas in continuous black pixel areas) produced by noise mixed for various causes during the processes described so far.

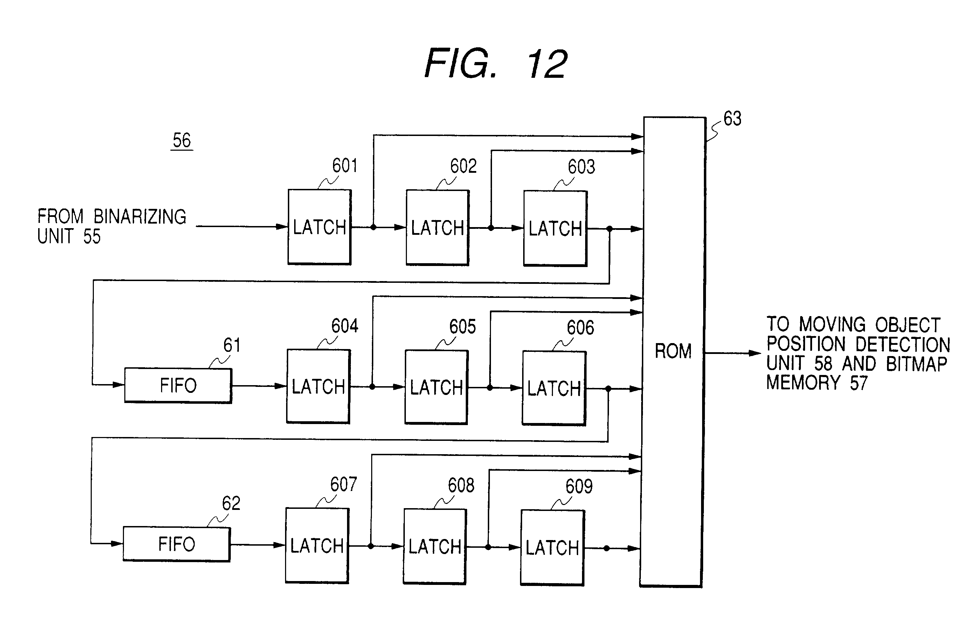

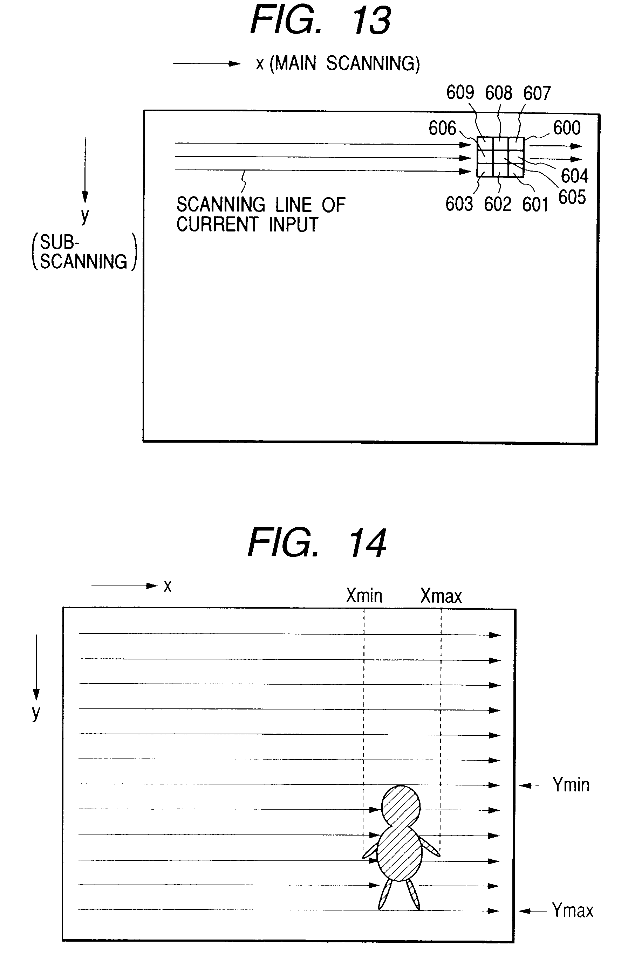

Fig. 12 shows the arrangement of the noise removal unit 56. Latches 601 to 609 shown in Fig. 12 hold bit data (1 bit x 9 pixels = 9 bits) of nine pixels corresponding to a 3 x 3-pixel area 600 as shown in Fig. 13. Each of FIFO memories 61 and 62 holds data corresponding to the number of pixels on one scanning line. That is, the FIFO 61 holds input data one line before the current scanning line. The FIFO 62 holds input data two lines before the current scanning line.

Of the nine latches 601 to 609, the latches 601 to 603 hold bit data corresponding to three pixels on the current scanning line. The latches 604 to 606 hold bit data corresponding to three pixels on a scanning line adjacent (in the subscanning direction) to the current scanning line. The latches 607 to 609 hold bit data corresponding to three pixels on a scanning line adjacent (in the subscanning direction) to the scanning line corresponding to the latches 604 to 606. Consequently, data is sequentially shifted in units of pixels in synchronism with sequential input of the output binary image data from the binarizing unit 55 to raster scanning lines. This realizes sequential scanning of the image in the area of 3 x 3 = 9 pixels.

A ROM 63 receives the nine output bits from the latches 601 to 609 as address input and outputs 1-bit data in accordance with the states of the nine output bits from the latches 601 to 609. The ROM 63 previously holds data by which the ROM 63 outputs 1 when five bits or more of the nine input address bits are 1 and outputs 0 when five bits or more of the nine input address bits are 0. That is, the ROM 63 is so set as to output black pixels when five pixels or more in the 3 x 3-pixel area are black pixels and output white pixels when four pixels or less in the area are black pixels. Isolated pixels can be removed by using the ROM 63 as a lookup table as described above. This noise removal unit 56 is a pipeline processing circuit, so an output is delayed by one scanning line and by one pixel from the input. However, binary pixels from which noise is already removed are sequentially output in the raster scan order.

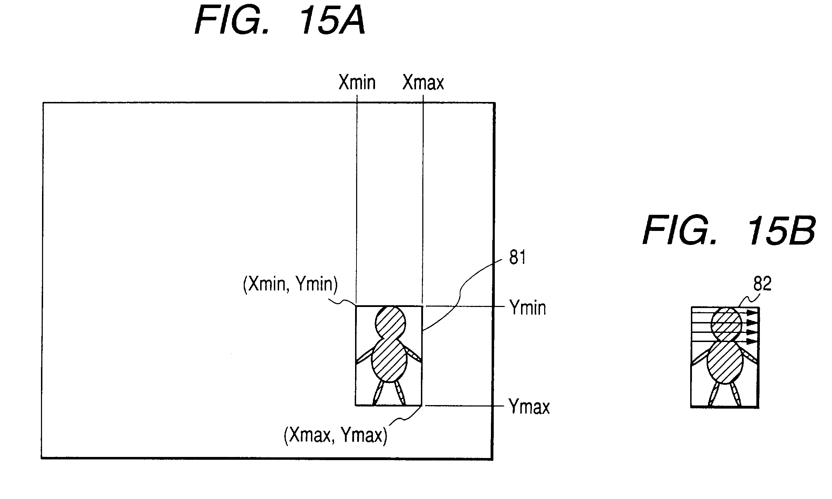

Referring to Fig. 11, a bit map memory 57 stores the binary pixel data of one frame output from the noise removal unit 56. A moving object position detection unit 58 sequentially receives the noise-removed binary image data in the raster scan order as shown in Fig. 14 and detects coordinate values $(X_{min}, Y_{min})$ and $(X_{max}, Y_{max})$ indicating a rectangular area 81 surrounding a black pixel area as shown in Figs. 15A and 15B. These coordinate values can be easily detected by a known circuit basically including counters and comparators.

That is, four counters and four buffers are prepared to detect and hold $X_{min}$, $X_{max}$, $Y_{min}$, and $Y_{max}$. A counter for detecting $X_{min}$ counts pixels in the main scanning direction until a black pixel appears for the first time in data on each scanning line (i.e., counts synchronizing pulses (not shown) in the main scanning direction). A comparator compares this count with a value counted on previous scanning lines and held in a buffer for holding $X_{min}$. If the counter value is smaller than the buffer value, the value held in the $X_{min}$ buffer is replaced with the current count; if not, the value held in the $X_{min}$ buffer is not changed. The value of the $X_{min}$ buffer is initialized to a value larger than the number of pixels contained in one main scanning line every time a line is scanned.

To obtain $X_{max}$, it is only necessary to detect pixel position on a main scanning line when a white pixel is detected after a black pixel is detected on the scanning line (i.e., to count main scanning synchronizing pulses until a change from a black pixel to a white pixel is detected). If this $X_{max}$ value is larger than a previous $X_{max}$ value, the $X_{max}$ value is updated; if not, the $X_{max}$ value is not updated. To obtain $Y_{min}$, it is only necessary to count scanning lines (subscanning synchronizing pulses) scanned before a scanning line containing a black pixel is first detected. To obtain $Y_{max}$, it is only necessary to count scanning lines before a scanning line containing no black pixel is again detected after a scanning line containing a black pixel is detected.

When one frame of the binary image is thus completely scanned, the coordinates $(X_{min}, Y_{min})$ and $(X_{max}, Y_{max})$ of the diagonal points of the rectangular area surrounding the moving object can be detected.

A moving object size detection unit 6 shown in Fig. 8 detects the size of the moving object on the basis of the output values $(X_{min}, Y_{min})$ and $(X_{max}, Y_{max})$ from the moving object detection unit 5 and the noise-removed binary image data held in the bit map memory 57 shown in Fig. 11.

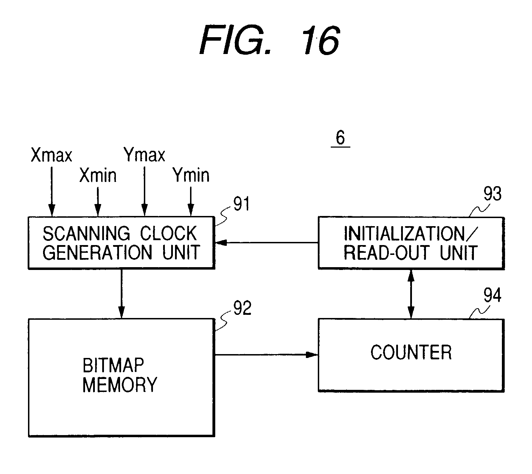

Fig. 16 shows the arrangement of the moving object size detection unit 6.

Referring to Fig. 16, a scanning clock generation unit 91 receives the coordinates $(X_{min}, Y_{min})$ and $(X_{max}, Y_{max})$ of the diagonal points of the rectangular area surrounding the moving object from the moving object detection unit 5 and sequentially generates (in a raster scan form) addresses for accessing only the rectangular area in a bit map memory 92.

That is, the scanning clock generation unit 91 generates scanning clocks for $(X_{max} - X_{min} + 1)$ pixels from $X_{min}$ to $X_{max}$ in the main scanning direction and scanning clocks for $(Y_{max} - Y_{min} + 1)$ scanning lines from $Y_{min}$ to $Y_{max}$ in the subscanning direction, thereby converting the area 81 shown in Fig. 15A into a binary image 82, shown in Fig. 15B, composed of $(X_{max} - X_{min} + 1)$ x $(Y_{max} - Y_{min} + 1)$ pixels. A counter 94 counts only black pixels (i.e., when black pixels are output as pixel value 1 and a white pixels are output as pixel value 0, counts only pixel values 1 output in this raster scan form) in the binary image having $(X_{max} - X_{min} + 1)$ x $(Y_{max} - Y_{min} + 1)$ pixels output from the bit map memory 92. In this manner the counter 94 counts the number of black pixels as the area of the extracted moving object. This number (area) of black pixels is the moving object size.

An initialization/read-out unit 93 initializes the scanning clock generation unit 91 and the counter 94 under the control of the system control unit 20 shown in Fig. 8. Also, the initialization/read-out unit 93 reads out the count from the counter 94 and outputs the readout count to the system control unit 20.

A distance measurement unit 11 shown in Fig. 8 will be described below. This distance measurement unit 11 receives a focusing lens motor driving pulse number (a pulse number indicating the number of pulses by which the focusing lens motor is driven from the reference position to the current position). This pulse number is output from the focusing control unit 8 and indicates the position of the focusing lens 2. The distance measurement unit 11 also receives a zooming lens motor driving pulse number (a pulse number indicating the number of pulses by which the zooming lens motor is driven from the reference position to the current position). This pulse number is output from the zoom control unit 10 and indicates the position of the zooming lens 1. The distance measurement unit 11 outputs the distance from the camera to an object on which the camera is focusing.

The image pickup lens 12 with a zooming function shown in Fig. 8, which includes the focusing lens 2 facing the imaging surface of the image pickup element 3 and the zooming lens 1 on the object side, is called a rear focus lens. For this rear focus lens, the focal point moves when the position of the zooming lens 1 is changed. Accordingly, an in-focus image can be obtained only when the focusing lens 2 is also moved.

When the rear focus lens is used, therefore, the position (i.e., the focusing lens motor pulse number) of the focusing lens 2 is changed to various values, and the distance from the camera to an object to be focused is previously actually measured for each of these positions. A lookup table is formed which receives the position (the zooming motor driving pulse number required to move from the reference position) of the zooming lens 1 and the position (the focusing lens motor driving pulse number required to move from the reference position) of the focusing lens 2 as addresses and outputs the corresponding distance from the camera to an object to be focused as data. This lookup table is implemented by a ROM.

Assuming that both of the zooming motor driving pulse number and the focusing motor driving pulse number can take on values from 0 to 2,047, the memory space is 2K x 2K = 4M ($2^{11}$ x $2^{11}$ = $2^{22}$), and the data dynamic range is 8 bits. That is, when the measurement resolution has 256 values and the range of 0 mm to ∞ is expressed by 256 different distances, the lookup table can be formed by a ROM having a capacity of 4 MBytes. The data dynamic range can also be 16 bits or the like where necessary. If this is the case, the focusing distance is expressed by one of 65,536 different distances within the range of 0 mm to ∞.

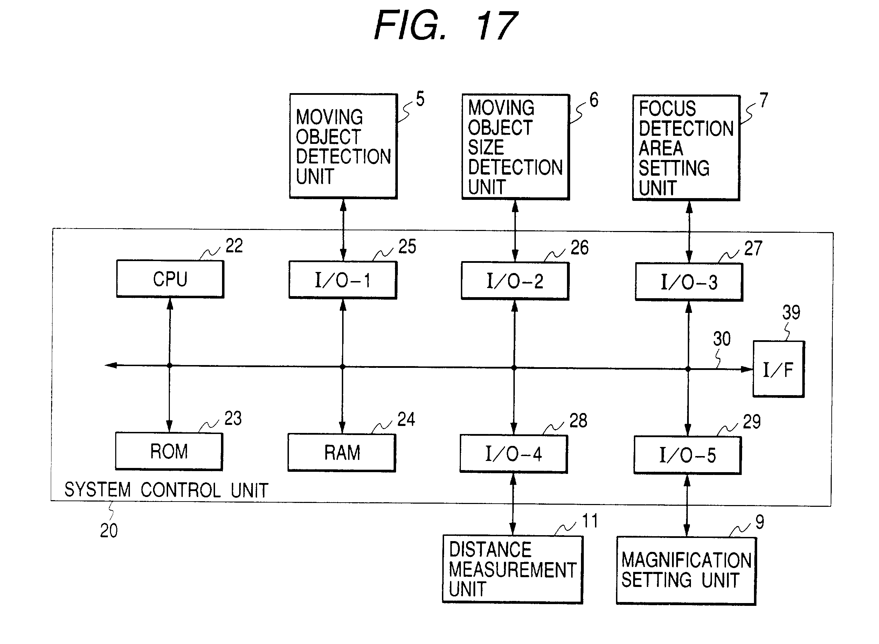

Fig. 17 shows the arrangement of the system control unit 20.

Referring to Fig. 17, the system control unit 20 includes a CPU 22, a ROM 23 storing programs as a storage medium according to the present invention, a RAM 24, I/O ports 25 to 29, a communication interface 39, and a bus 30. The CPU 22 reads out the programs stored in the ROM 23 and operates in accordance with the program procedures. In the course of the operation, the CPU 22 holds information required to be temporarily held and information changing in accordance with the situation in the RAM 24. As the storage medium, it is also possible to use a semiconductor memory, an optical disk, a magnetooptical disk, or a magnetic medium.

The I/O ports 25, 26, 27, 28, and 29 interface the CPU 22 with the moving object detection unit 5, the moving object size detection unit 6, the focus detection area setting unit 7, the distance measurement unit 11, and the magnification setting unit 9, respectively. The communication interface 39 communicates with external apparatuses. For example, the communication interface 39 receives the size of a moving object to be detected from an external apparatus or, when a moving object with a desired size is detected, informs an external apparatus of the detection.

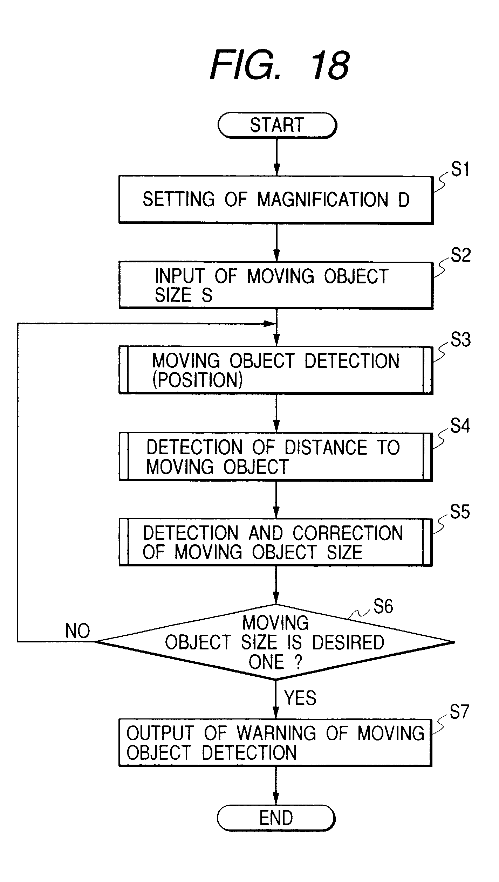

A series of operations of detecting a moving object of a known size will be described below with reference to a flow chart shown in Fig. 18. These operations are performed by the CPU 22 by reading out program procedures stored in the ROM 23 and executing the programs.

When the process is started in Fig. 18, in step S1 the CPU 22 receives a desired magnification D from an external host computer via the communication interface 39. The CPU 22 sets the input magnification D in the magnification setting unit 9 via the I/O-5 (29) shown in Fig. 17. As described previously, the magnification setting unit 9 causes the zoom control unit 10 to control the zooming lens motor in accordance with the magnification D and sets the desired magnification D in the apparatus.

After step S1, the flow advances to step S2, and the CPU 22 receives a size S of a moving object to be detected from the external host computer via the communication interface 39. The CPU 22 holds the input size information S in a predetermined area of the RAM 24. As this moving object size S, the number of pixels (in the case of the sphere 124 shown in Fig. 1, approximately 84,000 pixels contained in the sphere 124 shown in Fig. 2) at a field angle when the camera used in this system are set at a reference distance (in this embodiment, 1 m) and a reference magnification (in this embodiment, a magnification when the horizontal field angle is 36° and the vertical field angle is 27° is a reference magnification of 1x) is input.

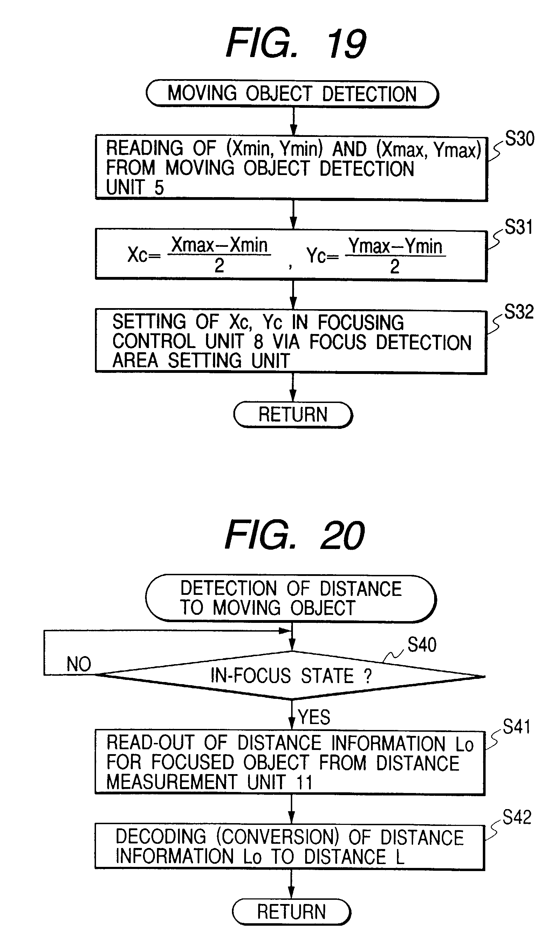

The flow then advances to step S3, and the CPU 22 starts a loop (steps S3 to S6) of detecting a moving object with a desired size. Fig. 19 shows details of step S3. Referring to Fig. 19, in step S30 the CPU 22 accesses the moving object detection unit 5 via the I/O-1 (25) and reads out the diagonal point coordinates $(X_{min}, Y_{min})$ and $(X_{max}, Y_{max})$ of the rectangular area 81 surrounding a moving object from the moving object position detection unit 58. The flow advances to step S31, and the CPU 22 calculates the coordinates $(Xc, Yc)$ of the central point of the rectangular area 81 surrounding the moving object by

$$Xc = (X_{max} - X_{min})/2$$

$$Yc = (Y_{max} - Y_{min})/2$$

on the basis of the readout coordinates $(X_{min}, Y_{min})$ and $(X_{max}, Y_{max})$.

The flow then advances to step S32, and the CPU 22 sets the coordinates (Xc,Yc) of the central point of the rectangular area surrounding the moving object, which are calculated in step S31, in the focusing control unit 8 via the I/P-3 (27) and the focus detection area setting unit 7. In this manner the CPU 22 sets the moving object as a focused object of distance measurement by the distance measurement unit 11. After completing the series of processes in step S3, the CPU 22 returns to the routine shown in Fig. 18, and the flow advances to step S4. In step S4, the CPU 22 detects the distance to the moving object.

Fig. 20 shows details of step S4. Referring to Fig. 20, in step S40 the CPU 22 receives a signal indicating whether the focusing control unit 8 determines that the moving object is in-focus via the focus detection area setting unit 7, thereby checking whether the moving object is in-focus. If the moving object is not in-focus, the CPU 22 repeats the process in step S40. If the moving object is in-focus, the flow advances to step S41. In step S41, the CPU 22 reads out information Lo about the distance to the focused object from the distance measurement unit 11 via the I/O-4 (28) shown in Fig. 17. The flow then advances to step S42. As described earlier, Lo expresses distance from 0 mm to $\infty$ as an 8- or 16-bit code. In step S42, therefore, the CPU 22 decodes the distance Lo to a distance L (m) from the camera to the focused object on the basis of a correspondence table (not shown) previously registered in the program.

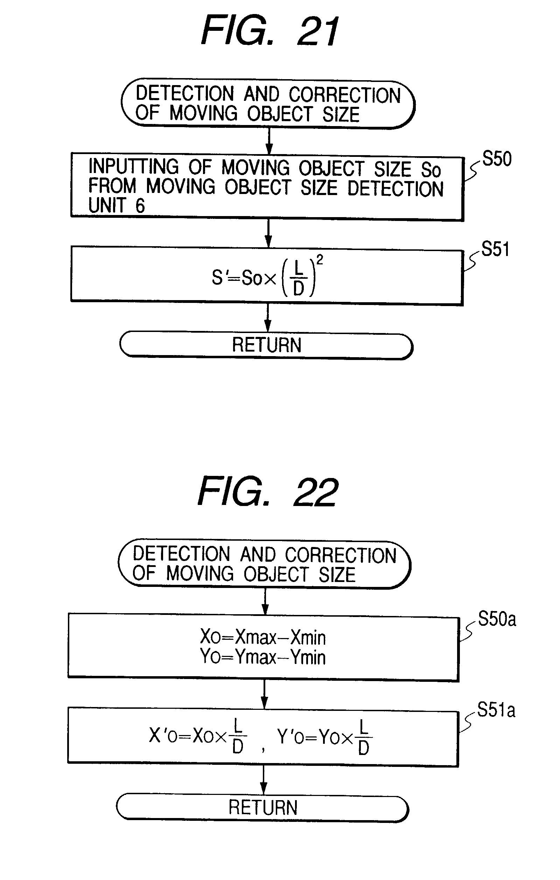

After completing the series of processes in step S4, the CPU 22 returns to the routine shown in Fig. 18, and the flow advances to step S5. Fig. 21 shows details of step S5.

Referring to Fig. 21, in step S50 the CPU 22 accesses the moving object detection unit 6 via the I/O-2 (26) shown in Fig. 17 to receive a moving object size (pixel number) So. The flow advances to step S51, and the CPU 22 calculates a size S', which is supposed to be obtained when the object is imaged at the reference distance of 1.0 m and the reference magnification, by

$$S' = So \times (L/D)^2$$

on the basis of the magnification D input in step S1, the distance L from the camera to the focused object calculated in step S42, and So input in step S50.

After completing the series of processes in step S5, the CPU 22 returns to the routine shown in Fig. 18, and the flow advances to step S6. In step S6, the CPU 22 checks whether the ratio of the size S' calculated in step S51 to the size S of the moving object to be detected, which is input in step S2 and held in the RAM 24, falls within a predetermined range. That is, the CPU 22 checks whether

$$0.8 < S'/S < 1.2$$

thereby checking whether the moving object has a desired size.

If the moving object does not have a desired size, i.e., if

$$0.8 \geq S'/S$$

or

$$1.2 \leq S'/S$$

the flow returns to step S3, and the CPU 22 repeats the procedure from moving object detection.

If the moving object has a desired size, i.e., if

$$0.8 < S'/S < 1.2$$

the flow advances to step S7.

In step S7, the CPU 22 informs the external apparatus of the detection of the moving object with a desired size via the communication interface 39.

In this manner the CPU 22 completes the procedure of detecting a moving object of a predetermined size.

Note that the constants 0.8 and 1.2 used in this embodiment can also be adjusted to, e.g., 0.75 and 0.25 or 0.85 and 1.15 in accordance with the components used and the use environment.

In the above first embodiment, the moving object size input in step S2 of the flow chart shown in Fig. 18 is not necessarily limited to the number of pixels of an object as a moving object to be detected, which is obtained when the object is apart the reference distance from the camera and the field angle of the camera is set at the reference magnification. That is, in the second embodiment of the present invention, a desired size composed of a horizontal size Xw (pixels) and a vertical size Yw (pixels) of a rectangular area surrounding an object as a moving object is input as the moving object size while the object is being imaged.

In the second embodiment, the parameter to be corrected in step S5 is not a moving object size So obtained from a moving object size detection unit 6 but the information relating to a rectangular area surrounding a moving object, which is obtained from a moving object detection unit 5. That is, the details of step S5 are changed to a flow chart shown in Fig. 22.

Referring to Fig. 22, in step S50a a CPU 22 calculates

$$Xo = X_{max} - X_{min}$$

$$Yo = Y_{max} - Y_{min}$$

on the basis of diagonal point coordinates $(X_{min}, Y_{min})$ and $(X_{max}, Y_{max})$ of a rectangular area surrounding a moving object, which is input from the moving object detection unit 5 in step S30 described above. In this way the CPU 22 calculates a width Xo in the horizontal direction and a height Yo in the vertical direction of the rectangular area.

The flow then advances to step S51a, and the CPU 22 calculates a horizontal size Xo' and a vertical size Yo' of the rectangle surrounding an object, which is supposed to be obtained when imaging is performed at a reference distance of 1.0 m and a reference magnification, by

$$Xo' = Xo \times (L/D)$$

$$Yo' = Yo \times (L/D)$$

on the basis of a magnification D input in step S1, a distance L from the camera to the focused object calculated in step S42, and Xo and Yo calculated in step S50a.

After completing the series of processes in step S5, the CPU 22 returns to the routine shown in Fig. 18, and the flow advances to step S6.

In step S6 of this embodiment, the CPU 22 checks whether the ratios of Xo' and Yo' calculated in step S51a to Xw and Yw input in step S2, respectively, fall within predetermined ranges. That is, the CPU 22 checks whether

$$0.8 < Xo'/Xw < 1.2$$

and

$$0.8 < Yo'/Yw < 1.2$$

thereby checking whether the moving object has a desired size.

If both of Xo' and Yo' satisfy the above conditions, the CPU 22 determines that a moving object with a desired size is detected; if not, the CPU 22 determines that no such moving object is detected.

The constants 0.8 and 1.2 described above can also be changed to, e.g., 0.85 and 1.15 or 0.75 and 1.25.

In this embodiment, the moving object size detection unit 6 need not count the number of pixels occupied in an image by a moving object. This simplifies the circuit configuration.

The moving object size input in step S2 of the flow chart shown in Fig. 18 is not necessarily limited to the form disclosed in the first embodiment. That is, in the third embodiment of the present invention, actual dimensions of an object as a moving object to be detected are input as the moving object size.

In this third embodiment, a vertical dimension (height) H (m) and a horizontal dimension (width) W (m) when an object is viewed front ways are input as actual dimensions. If the field angle is 36.0° and the distance from the camera to the object is 1 m, the horizontal width in an image is about 0.65 m, and this width is input by using 640 pixels. Accordingly, the relationship between the horizontal dimension (width) W (m) and a horizontal size Xw, explained in the second embodiment, of a rectangle surrounding an object at a reference distance and a reference field angle (magnification) explained in the second embodiment is given by

$$Xw = (W/0.65) \times 640$$

A vertical field angle of 27.0° of the camera corresponds to a width of about 0.48 m in an image taken at the reference distance, and this width is input by using 480 pixels. Therefore, a vertical size Yw, described in the second embodiment, of the rectangle surrounding the object at the reference distance and the reference field angle (magnification) can be calculated by

$$Yw = (H/0.48) \times 480$$

As described above, actual dimensions are input as the moving object size in step S2 and converted into Xw and Yw on the basis of the above equations. The rest of the operation is exactly the same as in the second embodiment.

In this embodiment, the size of a moving object can be input regardless of the specifications of a camera system. This improves the operability of the system.

Values in certain ranges can also be input as the desired moving object size described in the second embodiment. That is, in the fourth embodiment of the present invention, it is determined that a moving object has a desired size if the value of Xw satisfies

$$Xw_{min} \leq Xw \leq Xw_{max}$$

This similarly applies to Yw.

In step S6, it is determined that a moving object has a desired size if

$$0.8 < Yo'/Yw_{max} \text{ and } Yo'/Yw_{min} < 1.2$$

and

$$0.8 < Xo'/Xw_{max} \text{ and } Xo'/Xw_{min} < 1.2$$

More specifically, in the first embodiment,

whether

$$0.8 < S'/S_{max} \text{ and } S'/S_{min} < 1.2$$

hold for

$$S_{min} < S < S_{max}$$

is checked.

In the third embodiment, $H_{min}$, $H_{max}$, $W_{min}$, and $W_{max}$ satisfying

$$H_{min} \leq H \leq H_{max}$$

$$W_{min} \leq W \leq W_{max}$$

are input to calculate

$$Yw_{max} = (H_{max}/0.48) \times 480$$

$$Yw_{min} = (H_{min}/0.48) \times 480$$

$$Xw_{max} = (W_{max}/0.65) \times 640$$

$$Xw_{min} = (W_{min}/0.65) \times 640$$

On the basis of the above equations, deformation as in the second embodiment is performed.

This embodiment can handle an elastic, easily deformable moving object or a moving object which changes its size in accordance with the image pickup direction.

In each of the above embodiments, the size of a detected moving object is corrected on the basis of the magnification and the distance to the object. However, it is also possible to correct previously given information pertaining to the size of a moving object to be detected.

In each embodiment, a series of processes are complete if warning of detection of a moving object with a desired size is output as shown in the flow chart of Fig. 18. However, the present invention is not limited to the above embodiments, so moving object detection can also be repeatedly executed. That is, the flow can also return to step S3 even after step S7 in Fig. 18 is completed.

In the first to fourth embodiments as described above, a moving object of a particular size can be detected in a broader monitoring area than in conventional systems by using information indicating the distance to the moving object detected from an image, information regarding the size of the moving object to be detected, and information regarding the size of the moving object detected from an image. Also, a moving object of a specific size can be detected even when the magnification is varied. Furthermore, the above effects can be achieved with a simpler arrangement by using focusing control information in distance measurement.

The fifth embodiment of the present invention relates to a moving object detection apparatus for detecting a moving object in a predetermined distance range.

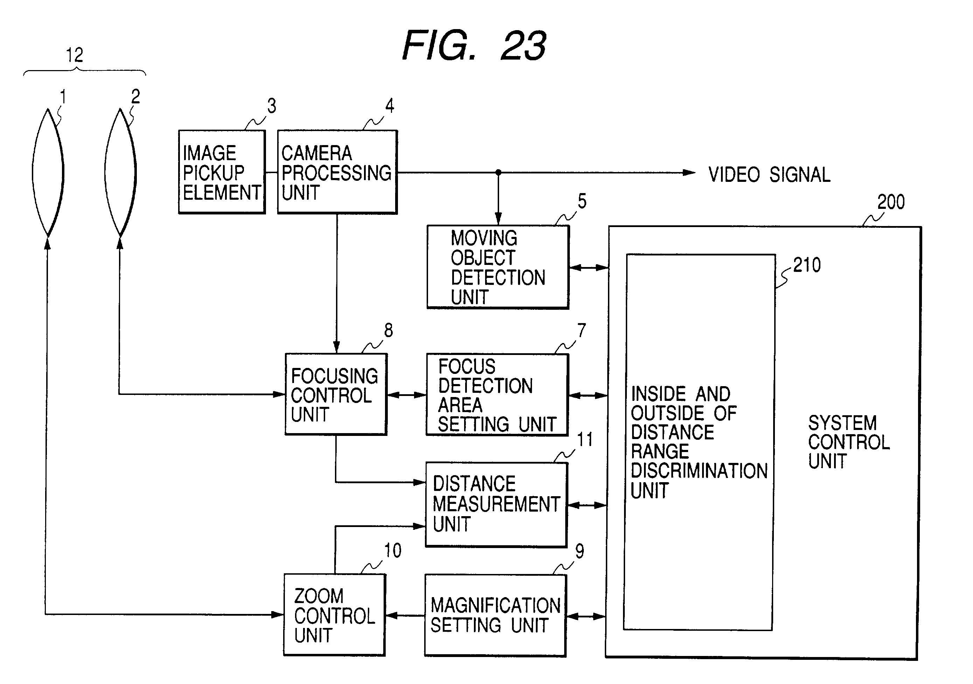

Fig. 23 is a block diagram showing the arrangement of the moving object detection apparatus according to the fifth embodiment of the present invention. The same reference numerals as in Fig. 8 denote parts having the same functions in Fig. 23, and a detailed description thereof will be omitted.

In this embodiment, the process of a system control unit 200 differs from that of the moving object detection apparatus shown in Fig. 8. This difference will be described below.

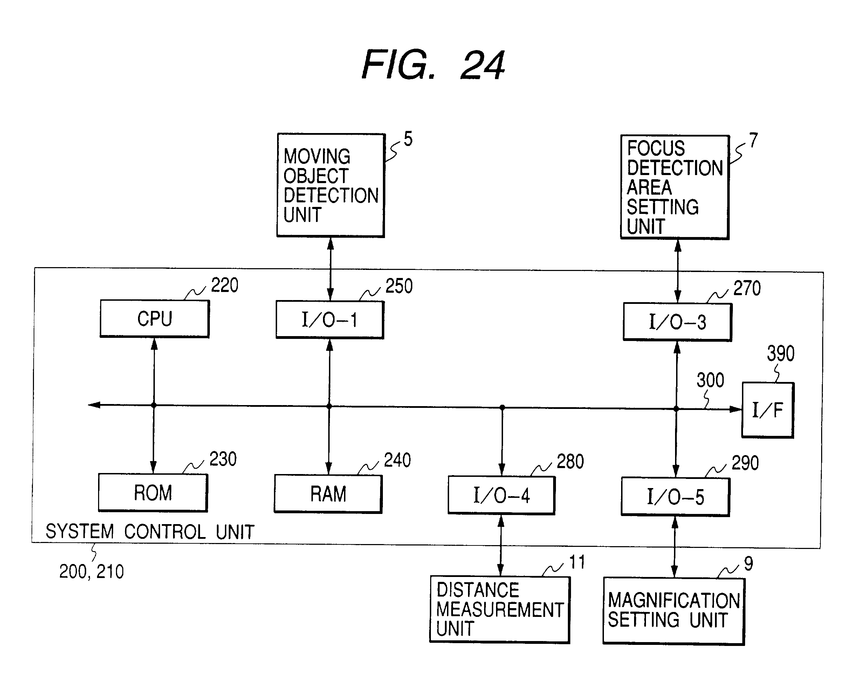

Fig. 24 shows the arrangement of the system control unit 200.

Referring to Fig. 24, the system control unit 200 includes a CPU 220, a ROM 230, a RAM 240, and a bus 300. The CPU 220 reads out programs stored in the ROM 230 and operates in accordance with the program procedures. In the course of operation, the CPU 220 holds information required to be temporarily held and information changing in accordance with the situation in the RAM 240. An I/O port (1) 250 interfaces the CPU 220 with a moving object detection unit 5.

I/O ports (3, 4, and 5) 270, 280, and 290 interface the CPU 220 with a focus detection area setting unit 7, a distance measurement unit 11, and a magnification setting unit 9, respectively. A communication interface 390 communicates with external apparatuses. For example, the communication interface 390 receives the size of a moving object to be detected from an external apparatus or, when a moving object with a desired size is detected, informs an external apparatus of the detection.

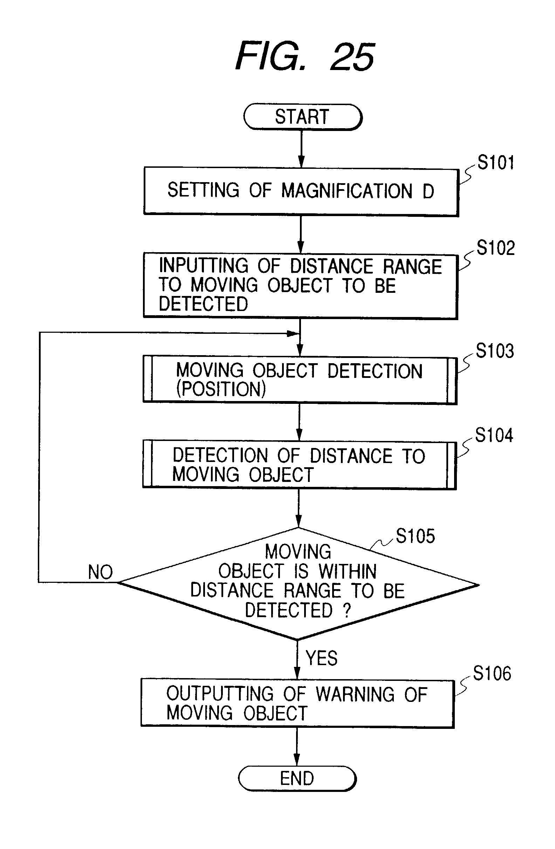

A series of operations of detecting a moving object in a predetermined distance range will be described below with reference to a flow chart shown in Fig. 25. These operations are performed by the CPU 220 by reading out program procedures stored in the ROM 230 and executing the programs. Note that the ROM 230 can be, e.g., a semiconductor memory, an optical disk, a magnetooptical disk, or a magnetic medium.

When the process is started in Fig. 25, in step S101 the CPU 220 receives a desired magnification D from an external host computer via the communication interface 390. The CPU 220 sets the input magnification D in the magnification setting unit 9 via the I/O-5 (290) shown in Fig. 24. As described previously, the magnification setting unit 9 causes a zoom control unit 10 to control a zooming lens motor in accordance with the magnification D and sets the desired magnification D in the apparatus. In step S102, the CPU 220 receives a distance range $L_0$-$L_1$ (m) to a moving object to be detected from the external host computer via the communication interface 390. The CPU 220 holds the input distance range $L_0$-$L_1$ in a predetermined area of the RAM 240. $L_0$ and $L_1$ represent the distances from an image pickup unit in the optical axis direction (the direction of depth) of a lens and satisfy $L_0 \leq L_1$. That is, a moving object to be detected is an object in the distance range of $L_0$ to $L_1$ from the image pickup unit. The flow then advances to step S103, and the CPU 220 starts a loop (steps S103 to 105) of detecting a moving object in the predetermined distance range.

Step S103 is the same as in the process procedure shown in Fig. 19, so a detailed description thereof will be omitted. When a series of processes in step S103 are complete, the flow advances to step S104, and the CPU 220 detects a distance L to a moving object.

Step S104 is the same as in the process procedure shown in Fig. 20, so a detailed description thereof will be omitted. When a series of processes in step S104 are complete, the flow advances to step S105.

In step S105, an inside and outside distance range discrimination unit 210 in Fig. 23 checks whether the moving object is in the predetermined distance range by checking whether $L_0 \leq L \leq L_1$. If $L_0 \leq L \leq L_1$, this means that the moving object is in the predetermined distance range, so the flow advances to step S106; if not, this means that no moving object is in the predetermined distance range, so the flow returns to step S103, and the CPU 220 again executes the loop of detecting a moving object in the predetermined distance range. In step S106, the CPU 220 informs the external apparatus of the detection of a moving object in the predetermined distance range via the communication interface 390.

In this manner the CPU 220 completes the procedure of detecting a moving object in a predetermined distance range.

The predetermined distance range designation method in the fifth embodiment is not restricted to designation of $L_0$ and $L_1$ (m). For example, in the sixth embodiment of the present invention, a predetermined distance Lc (m) and its nearby range $\Delta L$ (m) which are related to $L_0$ and $L_1$ in the fifth embodiment as:

$$L_0 = Lc - \Delta L$$

$$L_1 = Lc + \Delta L$$

are input.

Also, the unit of numerical values need not be in meters. That is, it is of course possible to use a value expressed by an 8- or 16-bit code which is used when the distance from a camera to an object to be focused is obtained by using an LUT, as explained earlier as the arrangement of the distance measurement unit 11. Furthermore, distance data need not be input from an external host computer via the communication interface 390. For example, the video camera main body can include dial switches or ten-key buttons (not shown), and an operator can directly designate data by using these switches or buttons.

An image pickup lens 12 in the fifth embodiment need not have a zooming function. In the seventh embodiment of the present invention, an image pickup lens having no zooming function is used.

In this embodiment, the magnification setting unit 9 and the zoom control unit 10 shown in Fig. 23, the I/O-5 (290) shown in Fig. 24, and step S101 shown in Fig. 25 are unnecessary. The position and focusing distance of a focusing lens are actually measured in advance to generate data of an LUT in a distance measurement unit 11. Addresses of the LUT are input by using driving pulses of a focusing lens motor. In this embodiment, a more inexpensive arrangement than in the fifth embodiment is possible, although no variable magnification can be set.

In the fifth to seventh embodiments of the present invention as described above, the distance to a moving object in an image is measured and compared with information pertaining to a predetermined distance range. Consequently, a moving object in the predetermined distance range can be reliably detected.

The above effect can be achieved with a simpler arrangement by using information regarding focusing control or zoom control in the distance measurement.

In other words, the foregoing description of embodiments has been given for illustrative purposes only and not to be construed as imposing any limitation in every respect.

The scope of the invention is, therefore, to be determined solely by the following claims and not limited by the text of the specifications and alterations made within a scope equivalent to the scope of the claims fall within the true spirit and scope of the invention.

**Claims**

1. An image processing apparatus comprising:

   a) input means for inputting image data;
   b) object detecting means for detecting an object in the input image data from said input means;
   c) measuring means for measuring a distance from the object detected by said object detecting means to a predetermined position; and
   d) predetermined object detecting means for detecting a predetermined object on the basis of an output from said measuring means.

2. An apparatus according to claim 1, wherein said predetermined object detecting means detects an object whose distance to the predetermined position falls within a predetermined range.

3. An apparatus according to claim 2, wherein said input means comprises image pickup means for picking up an image of an object via an optical system.

4. An apparatus according to claim 3, wherein the predetermined position is a position of said image pickup means.

5. An apparatus according to claim 3, wherein

said image pickup means comprises focusing control means for controlling focusing of said optical system, and
wherein said measuring means measures the distance from the object detected by said object detecting means to the predetermined position on the basis of focusing control information from said focusing control means.

6. An apparatus according to claim 1, further comprising size detecting means for detecting a size of the object detected by said object detecting means, wherein said predetermined object detecting means detects an object with a predetermined size on the basis of an output from said size detecting means.

7. An apparatus according to claim 6, wherein said predetermined object detecting means comprises setting means for setting a size of an object to be detected.

8. An apparatus according to claim 6, wherein

said input means comprises image pickup means for picking up an image of an object via an optical system,
said image pickup means comprising zoom control means for controlling said optical system to enlarge an image, and
wherein said predetermined object detecting means detects an object with the predetermined size on the basis of zoom control information from said zoom control means.

9. An apparatus according to claim 8, wherein

said image pickup means comprises focusing control means for controlling focusing of said optical system, and
wherein said measuring means measures the distance from the object detected by said object detecting means to the predetermined position on the basis of focusing control information from said focusing control means.

10. An apparatus according to claim 1, further comprising output means for outputting a detection output from said predetermined object detecting means to an external apparatus.

11. An apparatus according to claim 10, wherein when said predetermined object detecting means detects a predetermined object, said output means outputs the detection result to said external apparatus.

12. An apparatus according to claim 1, wherein said image processing apparatus is incorporated into a monitoring camera.

13. An apparatus according to claim 3, wherein said measuring means uses control information for controlling said optical system of said image pickup means.

14. An apparatus according to claim 3, wherein said predetermined object detecting means uses control information for controlling said optical system of said image pickup means.

15. An image processing apparatus comprising:

a) image pickup means having an optical system;
b) object detecting means for detecting an object in image data picked up by said image pickup means;
c) control means for controlling said optical system of said image pickup means; and
d) predetermined object detecting means for detecting a predetermined object on the basis of an output from said object detecting means and an output from said control means.

16. An apparatus according to claim 15, wherein said predetermined object detecting means detects an object within a predetermined distance range from said image pickup means.

17. An apparatus according to claim 16, wherein

said control means controls focusing of said optical system, and
wherein said predetermined object detecting means uses focusing control information from said control means.

18. An apparatus according to claim 15, further comprising size detecting means for detecting a size of the object detected by said object detecting means,
    wherein said predetermined object detecting means detects an object with a predetermined size on the basis of an output from said size detecting means.

19. An apparatus according to claim 18, wherein

    said control means controls zooming of said optical system, and
    wherein said predetermined object detecting means uses zooming control information from said control means.

20. An apparatus according to claim 15, further comprising output means for outputting the detection result to an external apparatus when said predetermined object detecting means detects a predetermined object.

21. An apparatus according to claim 15, wherein said image processing apparatus is incorporated into a monitoring camera.

22. An image processing method comprising the steps of:

    a) inputting image data;
    b) detecting an object in the input image data;
    c) measuring a distance from the detected object to a predetermined position; and
    d) detecting a predetermined object on the basis of the measurement result.

23. An image processing method comprising the steps of:

    a) inputting image data from image pickup means having an optical system;
    b) detecting an object in the input image data;
    c) controlling said optical system of said image pickup means; and
    d) detecting a predetermined object on the basis of the detection result in the object detection step and the control result in the control step.

# FIG. 1

## FIG. 2

# FIG. 3

# FIG. 4

102

# FIG. 5

102

101

100

# FIG. 6

# FIG. 7

EP 0 908 846 A2

# FIG. 8

# FIG. 9

640 PIXELS

480 PIXELS

31

140 PIXELS

33

140 PIXELS

32

EP 0 908 846 A2

# FIG. 10

BACKGROUND IMAGE 41

MONITOR IMAGE 42

43

44

RESULT OF MOVING OBJECT DETECTION

FIG. 11

5

VIDEO CAPTURE UNIT
51

FRAME MEMORY
52

+

DIFFERENCE OPERATION UNIT
54

BINARIZING UNIT
55

NOISE REMOVAL UNIT
56

MOVING OBJECT POSITION DETECTION UNIT
58

BACKGROUND MEMORY
53

−

BITMAP MEMORY
57

TO MOVING OBJECT SIZE DETECTION UNIT 6

EP 0 908 846 A2

## FIG. 12

56

FROM BINARIZING UNIT 55 →

601 LATCH → 602 LATCH → 603 LATCH

61 FIFO → 604 LATCH → 605 LATCH → 606 LATCH

62 FIFO → 607 LATCH → 608 LATCH → 609 LATCH

63 ROM

TO MOVING OBJECT POSITION DETECTION UNIT 58 AND BITMAP MEMORY 57

# FIG. 13

x (MAIN SCANNING)

609 608 607

606 600

604
605
603 602 601

SCANNING LINE OF
CURRENT INPUT

y

$\left(\begin{array}{c} \text{SUB-} \\ \text{SCANNING} \end{array}\right)$

# FIG. 14

x

Xmin    Xmax

y

Ymin

Ymax

# FIG. 15A

Xmin   Xmax

(Xmin, Ymin)

81

Ymin

Ymax

(Xmax, Ymax)

# FIG. 15B

82

# FIG. 16

6

Xmax    Ymax
   Xmin    Ymin

91

SCANNING CLOCK
GENERATION UNIT

93

INITIALIZATION/
READ-OUT UNIT

92

BITMAP
MEMORY

94

COUNTER

FIG. 17

EP 0 908 846 A2

# FIG. 18

```
            ┌─────────────┐
            │    START    │
            └──────┬──────┘
                   │
        ┌──────────▼───────────┐  S1
        │ SETTING OF MAGNIFICATION D │
        └──────────┬───────────┘
                   │
        ┌──────────▼───────────┐  S2
        │ INPUT OF MOVING OBJECT │
        │ SIZE S                │
        └──────────┬───────────┘
                   │
        ┌──────────▼───────────┐  S3
        │ MOVING OBJECT DETECTION │
        │ (POSITION)            │
        └──────────┬───────────┘
                   │
        ┌──────────▼───────────┐  S4
        │ DETECTION OF DISTANCE TO │
        │ MOVING OBJECT         │
        └──────────┬───────────┘
                   │
        ┌──────────▼───────────┐  S5
        │ DETECTION AND CORRECTION │
        │ OF MOVING OBJECT SIZE │
        └──────────┬───────────┘
                   │
              ◇─────────────◇  S6
         NO   MOVING
        ◄─────OBJECT SIZE IS DESIRED
              ONE ?
              ◇─────────────◇
                   │ YES
        ┌──────────▼───────────┐  S7
        │ OUTPUT OF WARNING OF MOVING │
        │ OBJECT DETECTION      │
        └──────────┬───────────┘
                   │
            ┌──────▼──────┐
            │     END     │
            └─────────────┘
```

27

# FIG. 19

MOVING OBJECT DETECTION

READING OF (Xmin, Ymin) AND (Xmax, Ymax) FROM MOVING OBJECT DETECTION UNIT 5 — S30

$$Xc = \frac{Xmax - Xmin}{2} \quad , \quad Yc = \frac{Ymax - Ymin}{2}$$ — S31

SETTING OF Xc, Yc IN FOCUSING CONTROL UNIT 8 VIA FOCUS DETECTION AREA SETTING UNIT — S32

RETURN

# FIG. 20

DETECTION OF DISTANCE TO MOVING OBJECT

IN-FOCUS STATE ? — S40
NO

YES

READ-OUT OF DISTANCE INFORMATION Lo FOR FOCUSED OBJECT FROM DISTANCE MEASUREMENT UNIT 11 — S41

DECODING (CONVERSION) OF DISTANCE INFORMATION Lo TO DISTANCE L — S42

RETURN

## FIG. 21

DETECTION AND CORRECTION
OF MOVING OBJECT SIZE

INPUTTING OF MOVING OBJECT SIZE So
FROM MOVING OBJECT SIZE DETECTION
UNIT 6 — S50

$$S' = So \times \left(\frac{L}{D}\right)^2$$ — S51

RETURN

## FIG. 22

DETECTION AND CORRECTION
OF MOVING OBJECT SIZE

$$Xo = Xmax - Xmin$$
$$Yo = Ymax - Ymin$$ — S50a

$$X'o = Xo \times \frac{L}{D} , \quad Y'o = Yo \times \frac{L}{D}$$ — S51a

RETURN

## FIG. 23

FIG. 24

SYSTEM CONTROL UNIT 200, 210

CPU 220
ROM 230
MOVING OBJECT DETECTION UNIT 5
I/O-1 250
RAM 240
FOCUS DETECTION AREA SETTING UNIT 7
I/O-3 270
300
I/F 390
DISTANCE MEASUREMENT UNIT 11
I/O-4 280
MAGNIFICATION SETTING UNIT 9
I/O-5 290

# FIG. 25

```
        ( START )
            │
            ▼
┌──────────────────────────┐  S101
│  SETTING OF MAGNIFICATION D│
└──────────────────────────┘
            │
            ▼
┌──────────────────────────┐  S102
│  INPUTTING OF DISTANCE RANGE│
│  TO MOVING OBJECT TO BE     │
│  DETECTED                   │
└──────────────────────────┘
            │
            ▼
┌──────────────────────────┐  S103
│  MOVING OBJECT DETECTION   │
│  (POSITION)                │
└──────────────────────────┘
            │
            ▼
┌──────────────────────────┐  S104
│  DETECTION OF DISTANCE TO  │
│  MOVING OBJECT             │
└──────────────────────────┘
            │
            ▼
          MOVING                  S105
    OBJECT IS WITHIN
    DISTANCE RANGE TO BE
        DETECTED ?
            │ YES
            ▼
┌──────────────────────────┐  S106
│  OUTPUTTING OF WARNING OF  │
│  MOVING OBJECT             │
└──────────────────────────┘
            │
            ▼
         ( END )
```

NO

YES